(19) Europäisches Patentamt
European Patent Office
Office européen des brevets

(11) **EP 3 280 123 B1**

(12) **EUROPEAN PATENT SPECIFICATION**

(45) Date of publication and mention of the grant of the patent:
**11.05.2022 Bulletin 2022/19**

(21) Application number: **17184476.4**

(22) Date of filing: **02.08.2017**

(51) International Patent Classification (IPC):
**H04M 3/22** *(2006.01)* **H04M 3/56** *(2006.01)*
**H04M 9/08** *(2006.01)* *G10L 21/0208* *(2013.01)*

(52) Cooperative Patent Classification (CPC):
**H04M 3/568; H04M 3/2236; H04M 9/082;**
G10L 25/78; G10L 2021/02082

(54) **STATE-BASED ENDPOINT CONFERENCE INTERACTION**

ZUSTANDSBASIERTE ENDPUNKTKONFERENZINTERAKTION

INTERACTION DE CONFÉRENCE BASÉE SUR L'ÉTAT D'UN POINT D'EXTRÉMITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.08.2016 EP 16182501**

(43) Date of publication of application:
**07.02.2018 Bulletin 2018/06**

(73) Proprietor: **Dolby Laboratories Licensing Corporation**
**San Francisco, CA 94103 (US)**

(72) Inventors:
• **GUNAWAN, David**
  **McMahons Point, NSW 2060 (AU)**
• **DICKINS, Glenn N.**
  **McMahons Point, NSW 2060 (AU)**

(74) Representative: **Dolby International AB**
**Patent Group Europe**
**Mr. Treublaan 7**
**1097 DP Amsterdam (NL)**

(56) References cited:
EP-A1- 2 302 891     US-A1- 2005 213 739
US-A1- 2009 003 586     US-A1- 2013 295 868

## Description

TECHNICAL FIELD

Embodiments herein relate generally to audio signal processing, and more specifically to dynamic adjustment of audio playback based on a determined conference state.

Document EP 2 302 891 A1 relates to methods and systems for reducing the effects of acoustic coupling during a conference call. In particular, the acoustic coupling occurs when a far-end audio output by the loudspeaker of a near-end unit is picked up by a microphone of the near-end unit and fed by to the far-end unit, due to the proximity of the loudspeaker and the microphone located on the same near-end unit.

Document US 2005/213739 A1 relates to methods and systems for controlling functions of an endpoint in an audio conference or a video conference and for using a protocol to communicate data during a conference.

SUMMARY OF THE INVENTION

Systems and methods are described for modifying far-end signal playback on an audio device. By monitoring the longer term (e.g., over a frame) voice activity of endpoints and contrasting this with specific voice activity, the audio device may anticipate the likely intent or nature of instantaneous audio traffic. By associating the likely intent with a predefined state, the device may further cull or remove unwanted or unlikely content from the device input and output. This may have a substantial advantage in allowing for full duplex operation in the case of more meaningful and continuing voice activity, particularly in the case where there are many connected endpoints. As used herein, full duplex operation refers to both local capture and far-end audio playback of a device operating substantially at the same time.

The audio device receives a far-end audio stream, and split the audio stream into a plurality of frames. Each frame is analyzed using a measure of voice activity to determine if there is voice activity within each frame, the analyzing producing far-end voice data associated with each frame. The far-end voice data indicates whether the associated frame contains voice activity, e.g., may be an estimate of the voice activity in the frame. Each frame is classified as either containing voice activity ('voice') or not containing voice activity ('not voice'). The far-end voice data may be determined by a voice activity detector, for example. Frames of a local input audio stream may also be analyzed using the measure of voice activity to produce near-end voice data. The near-end voice data may indicate whether the associated frame contains voice activity, e.g., may be an estimate of the voice activity in the frame. For example, each frame may be classified as either containing voice activity ('voice') or not containing voice activity ('not voice'). The near-end voice data may be determined by the voice activity detector, for example. Based on the far-end voice data and the near-end voice data, a conference state is determined. Based on the determined conference state, playback of the far-end audio stream on a speaker of the audio device or capture of local audio (e.g., on the audio device, for example by a microphone of the audio device) is modified. The conference state is indicative of a current presenter in the conference call, namely it is indicative of whether the near-end is presenting, the far-end is presenting, or whether the near-end and the far-end are in a two-way conversation. The conference state is one of a near-end-presentation state, a far-end presentation state, and an intermediate state (e.g., conversation state) between near-end presentation and far-end presentation.

Additional embodiments may include receiving a plurality of far-end audio streams, each stream being from a different endpoint, rather than receiving a single mixed audio signal that includes multiple endpoints. In a further example, each of the plurality of far-end audio streams may be transmitted with an associated data stream, each associated data stream including context information for the corresponding far-end audio stream. In such examples, analysis for voice activity may be performed on a per-stream basis. Based on the far-end voice data for each far-end audio stream and near-end voice data, the conference state may be determined. Playback of one or more of the plurality of far-end audio streams or capture of local audio (e.g., on the audio device, for example by a microphone of the audio device) may be modified based on the identified conference state and the received context information.

Further examples may analyze each frame of a far-end audio stream using two (different) measures of voice activity to determine if there is voice activity within each frame, the analyzing producing both binary voice data and continuous voice data for each frame. A nuisance state in the far-end audio stream may be determined by, for example, determining a nuisance parameter value for the audio stream that decays over time. The nuisance parameter may be modified based on one or more rules, the binary voice data, and the continuous voice data for the frame. The modified nuisance parameter value may be compared to a threshold, where a nuisance state is identified when the modified nuisance parameter value exceeds the threshold. When a nuisance state is identified, playback of the far-end audio stream on a speaker of the audio device may be modified.

BRIEF DESCRIPTION OF THE FIGURES

This disclosure is illustrated by way of example and not limitation in the figures of the accompanying drawings, in which like references indicate similar elements, and in which:

FIG. 1 shows a flow diagram for a method for modifying far-end signal playback on an audio device, in an embodiment.

FIG. 2 shows a simplified block diagram of a system for modifying far-end signal playback on an audio device, in an embodiment.

FIG. 3 shows a flow diagram for modifying far-end signal playback on an audio device, in an embodiment.

FIG. 4 shows a simplified block diagram of a system for modifying far-end signal playback on an audio device utilizing side-band communication between endpoints, in an embodiment.

FIG. 5 shows a flow diagram for a method for identifying a nuisance state in an far-end audio stream, in an embodiment.

FIG. 6 shows a flow diagram of a plurality of rules for modifying a nuisance parameter value, in an embodiment.

FIG. 7 is a block diagram of an exemplary system for modifying far-end signal playback on an audio device, in an embodiment.

DETAILED DESCRIPTION

In a conferencing system, there may be many participants simultaneously listening to a call, and each of these over time may want to participate and speak. However, while listening, different endpoints may have a tendency to inject minor noise and nuisance from sources such as typing, headset movements, room noise, coughs and breathing and even minor verbal acknowledgements. When coming from many participants over multiple endpoints, such nuisances may create a substantial amount of audio. In the case of a device operating in speaker mode, or outputting sound into a room, the amount of audio being played out in the room may directly impact the ability to capture audio in that room. This may be particularly true of a small audio conferencing device, where the speakers and microphones are in close proximity.

A typical problem use case with conventional conferencing systems is the experience of 'suck' or brown out, where the audio from a primary speaker or room of interest is momentarily impacted due to a spurious audio burst on the wider conference which has played out the device in that room. For example, room A is presenting material when user B coughs. As the cough is played out in room A, the captured audio from room A is compromised because echo suppression is activated to prevent an echo return path of the cough. All participants at this point may then hear a momentary degradation of the audio from A. In an extreme case where a user is making inadvertent noise, this can render the conference audio poor, requiring a listener to interrupt and resolve the issue as room A can no longer be well understood. This is a common and problematic scenario that takes time and productivity from audio teleconference meetings.

Conventional audio signal processing on conferencing endpoints has traditionally been oblivious to the rest of the conference. Audio signal processing on audio devices, such as speaker phones, conventionally performs functions such as suppressing noise, removing echo, and leveling the local signal. The choices of audio processing are generally pre-defined in the system, and potentially remain unchanged for all use of the audio device. The speakers of the audio device may be configured to output the audio present on the broader conference, and the microphone processing may be configured to optimize audio capture. The system generally operates as if at every moment there may be something of interest to capture in the room, and something important is coming in from the far end to playback. Not only is the signal processing configured without considering the wider state of the conference, the near-end audio signal processing has no real sense of state and time. This is somewhat limiting and suboptimal, given that so much of a conference and human interaction is longer-term state based, and there is a natural progression of speaking cadence and interaction.

The systems and methods described herein use the state of conference interactions to improve the audio processing of audio devices during conference calls. By intelligently analyzing the whole state of the conference and the interactions with a particular endpoint, there is the potential for signal processing that shifts set points (i.e. adjust capture of local audio) based on a conference optimization strategy. Shifting set points refers to the algorithmic parameters which affect how sensitive the algorithms are to microphone sensitivity, VAD and playback level. E.g. For playback level, maybe the output level is attenuated in a particular mode - relative to normal operation. The shifting set points may include one or more of changing microphone sensitivity, changing voice activity detection sensitivity, and changing loudspeaker playback level based on the conference state.

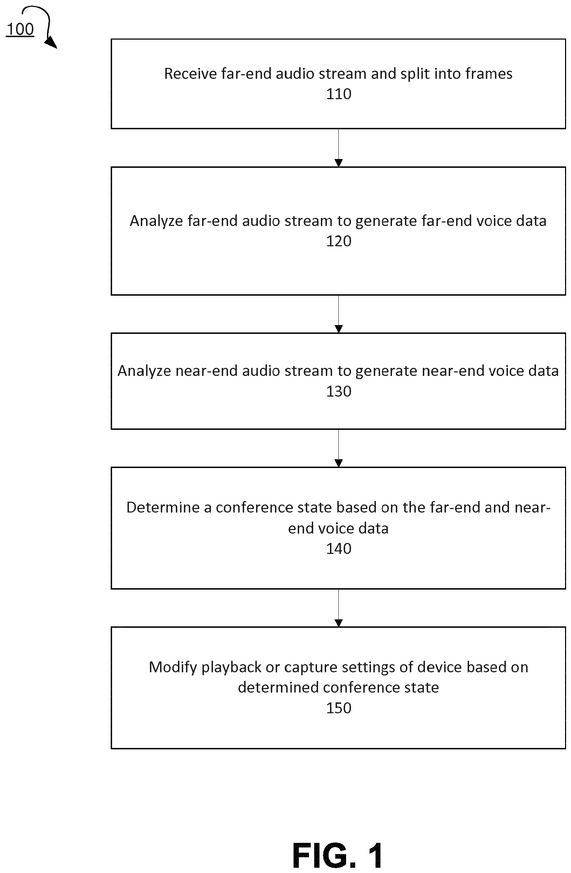

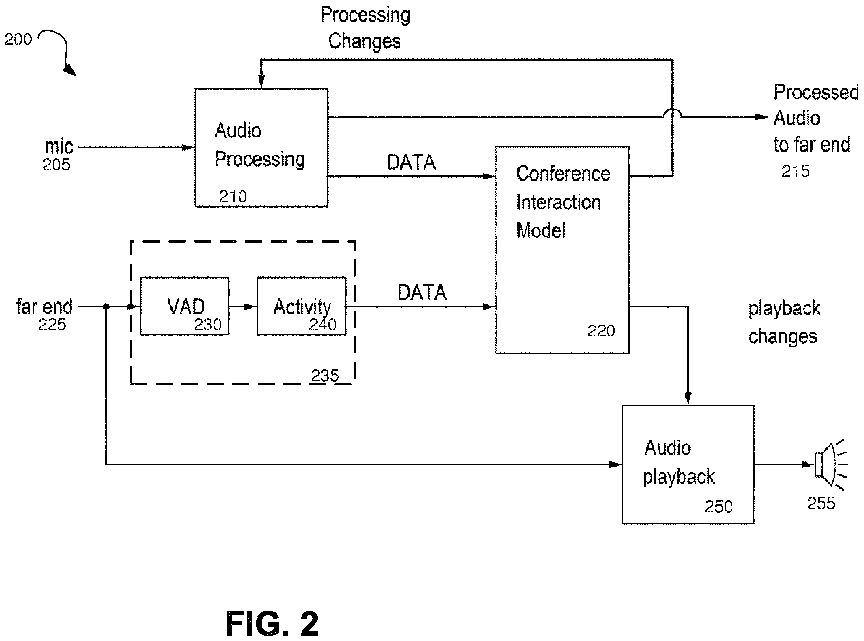

FIG. 1 shows a flow diagram for a method 100 for modifying far-end signal playback on an audio device, in an embodiment. FIG. 2 shows a simplified block diagram of a system 200 for modifying far-end signal playback on an audio device, in an embodiment, which may utilize method 100. The exemplary system 200 for modifying far-end signal playback includes conference interaction model (CIM) 220, near-end audio processing module 210, far-end audio processing module 235, and audio playback module 250. Far-end audio processing module 235 may include voice activity detector (VAD) 230 and voice activity module 240.

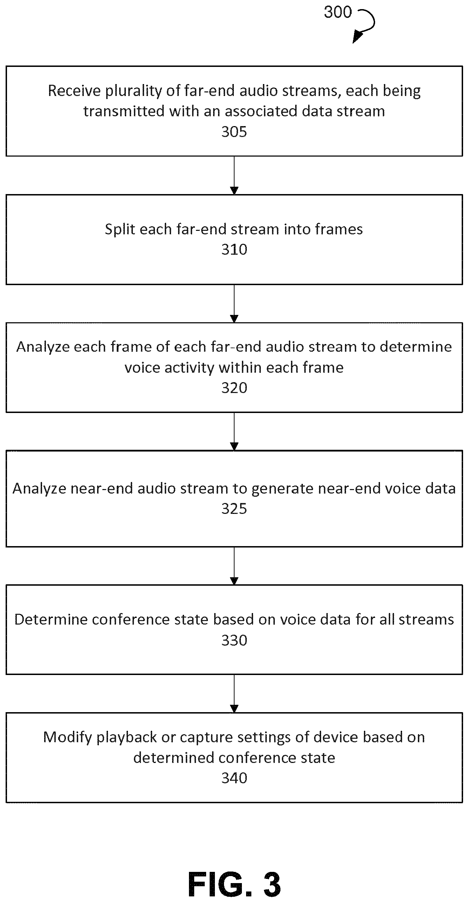

A CIM, such as CIM 220, may be defined as a conference state classifier that infers the type of interaction based on the voice activity patterns of the set of P endpoints. As described in greater detail below, by observing the activity of each endpoint in relation to other endpoints, it is possible to determine the type of conference is taking place (e.g. presentation, Q & A, discussion... etc). The conference state could be determined using various heuristics or machine learning of the activity inputs. Once the state of a conference is known and identified, this information can be relayed to an endpoint or all the endpoints to be used to affect the processing of the signals at each endpoint. This could affect everything from the loudspeaker playback level, or the amount of noise suppression, or the threshold of VAD, or the amount of leveling applied to the near-end microphone of the audio device. In particular embodiments, described below in the discussion of Figs. 3-4, each endpoint may be capable of calculating the incoming voice activity, and this information can be sent to a server or another endpoint to generate the CIM 220.

In method 100, the audio device may receive a far-end audio stream 225, and split the audio stream 225 into a plurality of frames at step 110. The far-end audio stream 225 may be from a single endpoint, or may be a mixed stream including inputs from multiple endpoints. The device may be any audio device having a speaker, such as a mobile telephonic device having a speaker phone function, or a dedicated speaker phone. The device may include the exemplary system 200 for modifying far-end signal playback on an audio device, for example.

Each frame may be analyzed using a measure of voice activity to determine if there is voice activity within each frame at step 120. The analyzing may produce voice data associated with each frame. For example, consider a conference containing P participant endpoints. Each endpoint may be physically located in a different environment, and may be in communication with the other endpoints via an audio device (e.g., a conference phone with loudspeakers). At step 130, a near-end audio stream may be analyzed to generate near-end voice data. Each conference phone may include an audio processor, such as audio processing module 210, configured to remove echo, adjust levels, and/or remove noise from the near-end recorded audio stream. The processing performed by audio processing module 210 may be performed before the voice activity analysis of step 130 is performed on the near-end voice data in some embodiments.

If the far-end audio stream 225 from endpoint $p$ is segmented into frames $f$, voice activity within the far-end audio stream $VAD_p[f]$ may be determined, where each frame $f$ is classified as either 'voice' or 'not voice' (binary 1 or 0 respectively) using a Voice Activity Detector (VAD) (e.g., VAD 230 in Fig. 2). Each endpoint may, in an embodiment, calculate both the voice activity of the near-end audio stream (from the microphone/s 205 of the audio device), and additionally calculates the voice activity of the far-end audio stream 225 (which is being played through the speakers 255). This may result in voice data, in the form of voice activity estimates from both the near end, $VAD_{near}[f]$, and far end, $VAD_{far}[f]$, where, in the embodiment, $f$ denotes frames calculated every 20 ms. Any suitable frame size may be utilized; 20 ms frames are just an example. System 200 for modifying far-end signal playback may assume that the far end audio stream 225 is already mixed, and may have little information around who or how many participants are generating the present audio.

The voice activity $VAD_{far}[f]$ in the far-end audio stream 225 can be then further temporally processed (e.g., using a heuristic) to provide an improved voice activity estimate depending on how much latency can be tolerated. For example, a heuristic may be applied by activity module 240 to the voice activity data produced by VAD 230 to remove short bursts - such that only after 500ms of voice activity is the processed voice activity value for the frame $V[f] = 1$. Additionally, a 'hold over' may be applied to keep $V[f] = 1$ for an additional 1 sec when the VAD 230 outputs a value of 1 for a frame. Similar processing may also be applied to the near-end audio stream. When applied to both the near-end and far-end audio streams, the processing may result in filtered voice activity estimates of the near and far end on a particular device $V_{near}[f]$ and $V_{far}[f]$ respectively. Note that embodiments may vary around the tunings of time for the burst rejection and talking hold over. For example, the heuristic may reject bursts of detected sound when the sound is less than a selected value in the range of 200-2000ms, and further heuristics may add hold over times selected from the range of 500ms - 2000ms in various embodiments.

The voice activity data $V[f]$ may then fed into a Conference Interaction Model (CIM) 220, which attempts to estimate the type of interaction taking place. Based on the received far-end and near-end voice data, a conference state may be determined at step 140 by the CIM. In an exemplary embodiment, there are three predefined states: Near end presentation, Far end presentation and Transactional conversation. In further embodiments, the determining the conference state includes calculating a transaction parameter value based on the voice data and the near-end voice data. Based on the calculated transaction parameter value, the conference state is assigned to the conference call. The transaction parameter value T may be defined as a low-pass filtered measure of the voice activity at the far end. In an exemplary embodiment, the transaction parameter value is computed using the following expression:

$$T[f] = \max\{0, \min\{1, \alpha T + (1 - \alpha)A[f]\}\} \qquad (1)$$

In equation (1), $\alpha \in (0,1)$ may be a transaction time constant governing the rate of transaction aggregation, and A[f] may be the voice activity of the far end. A[f] may be calculated using the following expression, in an embodiment:

$$A[f] = \begin{cases} 1, & V_{far}[f] = 1 \\ 0, & V_{near}[f] = 1 \end{cases} \qquad (2)$$

Further, the voice activity of the far end A[f] may be set to zero if both $v_{far}[f]$ and $V_{near}[f]$ are zero. Accordingly, the transaction parameter value is dependent upon both near-end voice activity and far-end voice activity, in the exemplary embodiment. The transaction parameter value T for a far-end audio stream may be a measure of the transactional nature of the conference call, and may range between 0 and 1. When T is close to 1, the far-end is likely presenting, and when T is close to 0, the near end is likely presenting. In between these values exists a state of transaction around 0.5. Fixed thresholds for T can be placed to denote various states, or hysteresis thresholds, which are adjustable based on previous values of T, may be used.

Based on the determined conference state, playback of the far-end audio stream on a speaker of the audio device may be modified at step 150. In some embodiments, capture of the near-end audio stream may be adjusted by near-end audio processor 210 based on the determined conference state, as is shown in Fig. 2 (with respect to processed near-end audio 215). In an exemplary embodiment, if T >= 0.9 (indicating a far end presentation), VAD thresholds for the near-end audio stream may be increased (less sensitive), microphone levels may be decreased (attenuated transmission), and noise suppression of the near-end audio stream may be increased by the CIM 220 (providing modified settings to audio processing module 210) to minimize disturbance of spurious noise interrupting the far-end presentation. The CIM 220 may also modify playback of the far-end audio stream through the speakers 255 by providing modified settings to audio playback module 250, causing the far-end audio stream to be played back slightly louder. In one embodiment, it was also found useful to increase the voice detection threshold equivalent to halving the rate of false alarms on a test corpus; to decrease the microphone transmit level on average by 6dB; and to increase the speaker output by 3-6dB, or return to the desired volume setpoint of the user during the far-end presentation state.

In a further embodiment, if T = <0.1 (indicating that the near end endpoint is presenting), VAD thresholds for the near-end audio stream can be decreased (to be more sensitive for transmission) by the near-end audio processor 210. The near-end audio processor 210 may also increase microphone levels (e.g., from nominal transmission levels to perhaps 3dB higher) and decrease noise suppression to maximize the capture of audio from participants at the near-end endpoint. The playback level of the far-end audio stream can also be reduced by CIM 220 (via audio playback module 250) to improve double talk performance and minimize other distractions. In some embodiments, in this case of T=0 or close, the main endpoint may enter a continuous transmission mode, whereby there is no loss of audio due to voice activity detection errors (i.e., the state may be held regardless of VAD changes).

In additional embodiments, when $T \in [0.4, 0.6]$ then the conference is likely in transactional conversation state and processing can proceed in its default mode, without any modification to playback of the far-end audio stream (or capture of the near-end audio stream). In such embodiments, the threshold between the near end presentation state and the transactional conversation state would be a T value of 0.4. Likewise, the threshold between the transactional conversation state and the far-end presentation state would be a T value of 0.6. The threshold values, while defined as 0.4 and 0.6 in the exemplary embodiment, may be set to any desired value. Since the trajectory of T is effected by a low pass or smoothing filter ($\alpha \in (0,1)$) it is noted that the suggested endpoints of VAD threshold and gain adjustment can be modulated appropriately between the suggested values, in that from T=0.1 .. 0.4 and also T = 0.6 .. 0.9, the gains may be appropriately scaled in a monotonic and in some embodiments a linear fashion.

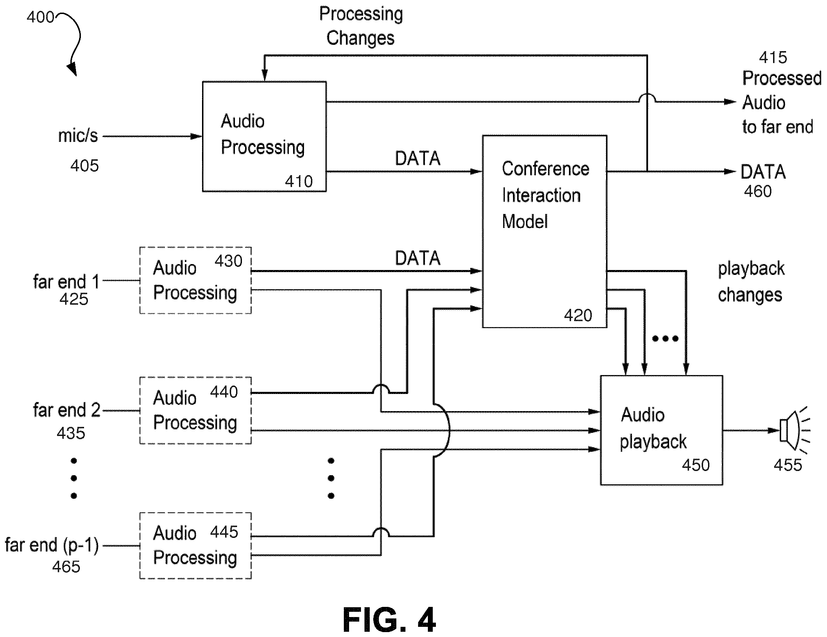

As noted above, FIGS. 1-2 pertain to an embodiment where the far end is already mixed, and the audio device has little information around whom or how many participants are generating the far-end audio stream. FIG. 3 shows a flow diagram for an alternative method 300 for modifying far-end signal playback on an audio device, in an embodiment, where there is an additional data channel to send information between endpoints. Such embodiments may be used when audio devices communicate over voice over Internet protocol (VoIP) channels, for example. FIG. 4 shows a simplified block diagram of a system 400 for modifying far-end signal playback on an audio device utilizing side-band communication between endpoints, in an embodiment. The exemplary system 400 may include CIM 420, near-end audio processing module 410, far-end audio processing modules 430, 440, and 445, and audio playback module 450.

In method 300, the audio device may receive a plurality of far-end audio streams (425, 435, etc. up to far end audio stream (P-1) 465) at step 305. Each far-end audio stream may be split into a plurality of frames at step 310, similarly as described above in FIG. 1. Each frame of each far-end audio stream may be analyzed to determine voice activity within each frame at step 320. While the audio processing modules 430, 440, and 445 of the system 400 may be used to determine voice activity (as was done in system 200), in an alternative embodiment, the voice activity data may be received via the additional data channel. Similar to method 100, at step 325 a near-end audio stream may be analyzed to generate near-end voice data.

At step 330, the conference state for each far-end audio stream may be determined based on the voice data for each stream. When there is an additional data channel in which to send information, it is possible to construct a more complex CIM based on specific endpoint VAD information, noise suppression, leveling information and a variety of information captured by the signal processing engines at the various endpoints. Additional information can be captured related to the specifics of the particular device in use, its geography and other system related information. This information can be sent to a conferencing server or to another endpoint where the CIM resides. If a CIM resides in each endpoint, it is possible for each CIM to also communicate with each other so each CIM knows specific state details from the other endpoints, as the state details may be transmitted in the data channel. The CIMs from each audio device can effectively compare notes and sort out differences, as a CIM would have access to audio processing information from every endpoint in the conference. With more information, the CIM can determine even more about the state of the conference.

A presenter may be identified from a plurality of far-end audio streams and modify playback of presenter far-end audio stream in step 340 (e.g., by increasing the volume of the presenter far-end audio stream). In addition to the conference state being calculated, similar measures of the participative nature of each endpoint can be determined by evaluating the processing undertaken. For example, if an endpoint is consistently interrupting with spurious noise incongruent with traditional conversational dynamics models, this endpoint can then be put into a 'nuisance' mode by the CIM, where VAD thresholds are increased, noise suppression is increased and other processing is set to aggressively minimize the potential for conference disturbance. In a further embodiment, if an endpoint is setup in a configuration page to be an 'executive office', then this can potentially weight the importance of contribution to the CIM calculations. VAD can be set to be more sensitive, and microphone level may be increased for near-end audio capture to ensure the presenter is heard. In some cases, the CIM is able to use additional context information, such as the relative locations of endpoints and types of rooms or attendance in each room, the nature of the meeting as scheduled and the roles such as chairperson, additional activity such as document sharing, presenting, typing and video, information around quality of network connection and the likelihood of meaningful transmission, and information around the context of a user such as their movement and location.

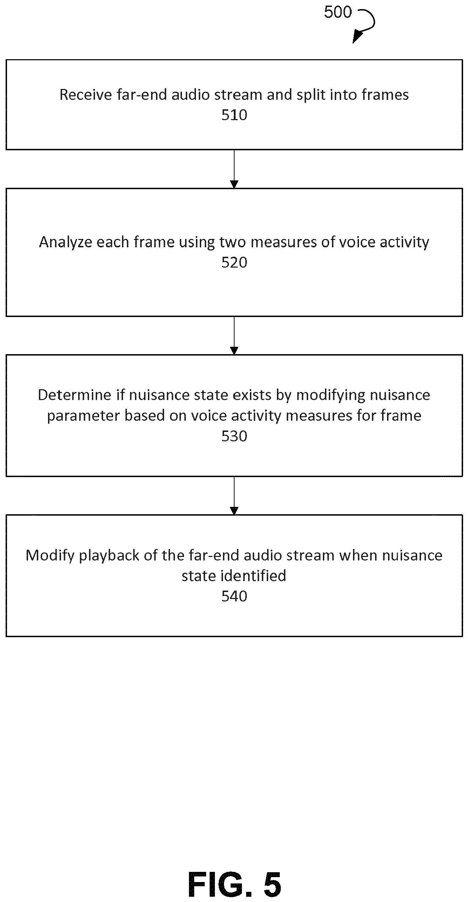

Other types of modifications may be made to far-end audio streams in accordance with the present invention. FIG. 5 shows a flow diagram for a method 500 for identifying a nuisance state in a far-end audio stream, in an embodiment. In method 500, the audio device may receive a far-end audio stream, and split the audio stream into a plurality of frames at step 510. At step 520, each frame may be analyzed using two measures of voice activity to determine if there is voice activity within each frame. The analyzing may produce both binary voice data and continuous voice data for each frame. $R_t$ may be defined as the binary measure of audio activity based on a speech activity classifier (such as a VAD, for example). $V_t$ may be defined as a continuous measure of voice activity based on a higher latency (and more specific) voice classification algorithm. In some embodiments, $R_t$ may be a simple flag based on receipt of audio if the conference upstream already has sophisticated voice activity detection. $R_t$ may also be a measure of incoming energy, say for example with a threshold of -40dB RMS relative to full scale which would remain inactive for the typical incoming background noise signals. In other embodiments, $R_t$ may include some trained classifiers that are targeted at having a low latency activity detection, where a low latency is deemed to be <100ms. Such a system, that uses two measures of voice activity, is generally able to adapt and remove sensitivity to energy from stationary or low informational sounds such as background noise, rumble, fans, motors, air conditioning, low level background mumble, car noise and other common constant noise sources. $R_t$ may have an additional hold over of 200-500ms to avoid detection of micro-pauses in speech as the end of a frame of voice activity.

In some embodiments, $V_t$ may be set as an integrated or low pass filtered version of another classifier. $V_t$ may utilize a larger window of activity, of the order of 500-2000ms, for example, in order to identify communicative speech as opposed to less relevant noises such as taps, typing, breathing, russling, chair and table noises, coughs and other non-stationary noises. Such non-stationary noise may otherwise trigger the lower latency flag $R_t$, despite not being informative speech once reviewed over a longer observational window. In one embodiment, $V_t$ may be implemented as a first order smoothed signal from an instantaneous classifier updated when $R_t$ is 1. Without loss of generality, $R_t$ may have a value of either 0 or 1, and $V_t$ may have a value in the range of 0 to 1 on a continuous scale.

At step 530, a determination is made whether a nuisance state exists within the far-end audio stream. One way of making this determination is by defining a nuisance parameter value for the far-end audio stream. The nuisance parameter may be a measure of the likelihood of an immediate burst of sound being undesirable for the ongoing conference, and therefore more likely to cause a degradation of the room capture than signal a desired interjection or request for far end turn taking. In a nuisance state, the far-end audio stream may be modified by, for example, suppressing the output of the near-end audio device for better results in the duplex performance or local audio capture. The nuisance value may accordingly be connected to a volume reduction of the output.

The nuisance parameter value $N(t)$ may be defined at each instance in time, and may decay over time. The nuisance parameter value may have a natural decay time constant such that with no other condition holding:

$$N(t+1) = \beta N(t) \tag{3}$$

The constant $\beta$ may be set for a decay half life time constant value selected in a range between 10 and 120s in an exemplary embodiment (e.g., 60s in a particular embodiment). That is, for a half life of 10s and a 50Hz update rate, $\beta$ is selected such that $\beta^{\wedge}500 = .5$.

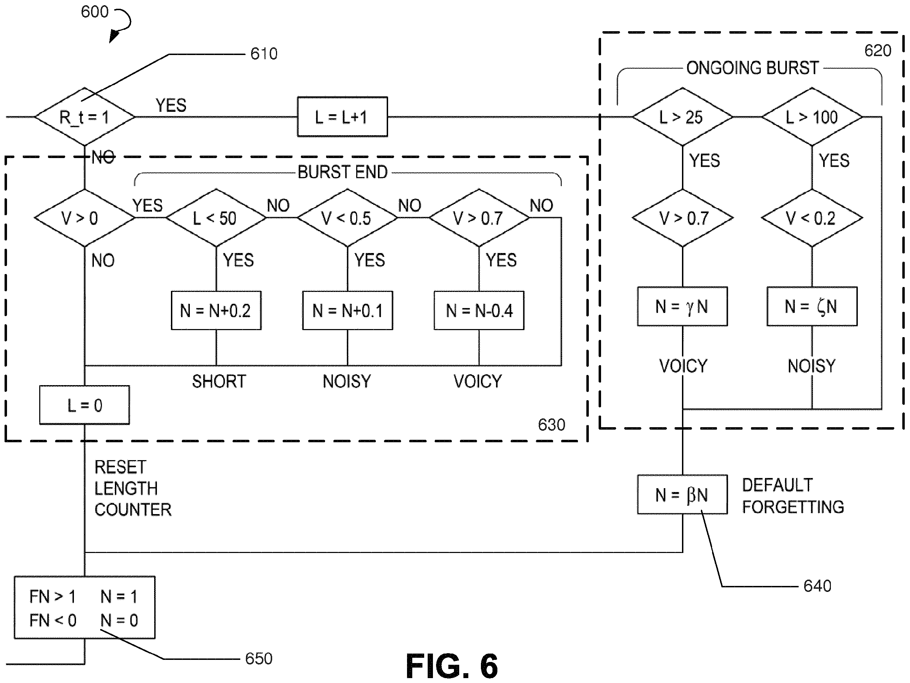

The nuisance parameter N(t) may be modified based on one or more rules, the binary voice data for the frame R_t and the continuous voice data for the frame V_t. FIG. 6 shows a flow diagram 600 of a plurality of rules for modifying a nuisance parameter value, in an embodiment. State machine 600 provides exemplary rules for modifying the nuisance parameter value, without loss of generality for a frame time of 20ms typical of speech processing.

For example, at the end of a burst of activity, where R_t transitions from 1 to 0, shown at block 610, the length of the activity burst may be considered in logic block 630. If the activity burst is found to be less than a predefined length, the value of N(t) may be further incremented by a constant value:

$$N(t) = N(t) + C\_short \tag{4}$$

In the embodiment shown in FIG. 6, the time threshold for this action was set at 1000ms, with values in the range from 500ms to 2000ms found to meaningfully discriminate between nuisance noise and desired noise. In one embodiment, a value for C_short was set at 0.2, representing 5 activity bursts to set full nuisance level, and values of 0.1 to 0.5 may be used.

Another rule that may be used is also shown in block 630, where, at the end of a burst activity, when the length exceeds the previous test, if the Voice ratio V_t is below a first threshold, the nuisance level may be incremented:

$$N(t) = N(t) + C\_noiseburst \tag{5}$$

In the embodiment shown in FIG. 6, the first threshold for the voice ratio was set at 0.5, but values in the range of 0.2 to 0.7 may be selected. The increment C_noiseburst was set to 0.1 in flow 600, but values in the range of 0.1 to 0.4 may be selected to increment the nuisance parameter value. Similarly, during a burst of activity of duration longer than a given length, whilst R_t = 1, if the ratio of voice activity exceeds a second threshold, the nuisance parameter value may be reduced using a faster time constant:

$$N(t) = \gamma N(t) \tag{6}$$

In the embodiment shown in FIG. 6 at block 630, the second threshold of V for this was set at 0.7 (but may be selected from the range 0.6-0.8), and the time constant of 400ms was found to be useful (but any value from the range 200-1000ms may be selected). This is to restore nuisance once a concerted effort to communicate is discerned.

During a burst of activity longer than a given length, another rule (shown in block 620) may indicate that if the ratio of voice falls below a certain threshold, the nuisance level may be increased:

$$N(t) = N(t) + C\_noisesustain \tag{7}$$

While equation (7) indicates additive modification of the nuisance level, multiplicative modification of the nuisance may be used in some embodiments. Where C_noisesustain in some embodiment represents a ramp from 0 to 1 over a time of around 5000ms (e.g.1/250$^{\text{th}}$ of a second increments).

Returning to FIG. 5, when a nuisance state is identified, based on the thresholds described above, for example, playback of the far-end audio stream on a speaker of the audio device may be modified at step 540. In an embodiment, the far-end audio stream may be attenuated by a gain, defined as:

$$G\_t = 10 ^{\wedge} ( G\_db / 20 * N(t) ) \tag{8}$$

The attenuation of the far-end audio stream, in dB, may be accordingly scaled linearly with N_t. In one embodiment an attenuation of 10dB is used; however, any desired attenuation from the range of 3 - 20dB may be selected.

While FIG. 5 assumes a mixed far-end signal where there are multiple far-end endpoints, as described above, it is possible to identify the source of multiple audio endpoints uniquely (e.g., using a separate data channel, as shown in FIG. 4). In such cases, a nuisance value could be calculated for each independently identified incoming stream. This is still possible even in the case of a system that combines both mixing and forwarding, or in systems that use peer to peer. If there is the possibility of identifying different source identities, it is useful to have multiple values of nuisance.

When a device only receives audio from far-end endpoints, the device must infer the state of the conference. Where there is additional metadata between clients, however, the nuisance may be calculated locally at the point of transmission, and this could incorporate additional information from the local context. The receiving end may then have a value of nuisance for each incoming audio stream. In both cases above, multiple values of N_t are available, based on the potential end-points. This would improve device performance, as gains for each far-end stream would be received as metadata instead of being calculated as pre-processing at the device. As such, it is presented that the cumulative or present applied attenuation and associated overall N_t may be calculated by, for example, taking instantaneously the minimum nuisance of any currently active incoming audio. This may allow break through for endpoints that were not otherwise causing a nuisance. A further embodiment may include a smoothing filter, such as a low pass filter, with time constant of 100-300ms in order to avoid sudden jumps in the output level.

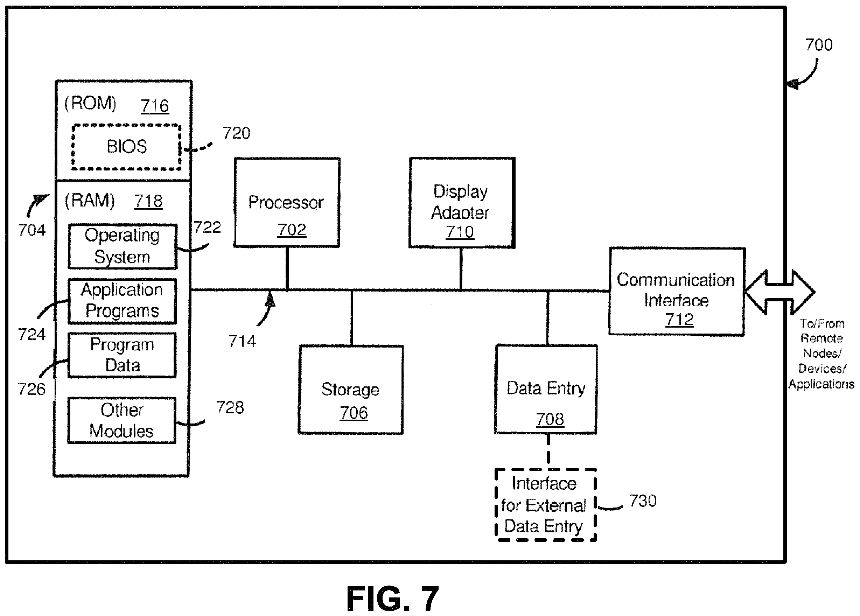

FIG. 7 is a block diagram of an exemplary system for modifying far-end signal playback on an audio device, in various embodiments of the present invention. With reference to FIG. 7, an exemplary system for implementing the subject matter disclosed herein, including the methods described above, includes a hardware device 700, including a processing unit 702, memory 704, storage 706, data entry module 708, display adapter 710, communication interface 712, and a bus 714 that couples elements 704-712 to the processing unit 702.

The bus 714 may comprise any type of bus architecture. Examples include a memory bus, a peripheral bus, a local bus, etc. The processing unit 702 is an instruction execution machine, apparatus, or device and may comprise a microprocessor, a digital signal processor, a graphics processing unit, an application specific integrated circuit (ASIC), a field programmable gate array (FPGA), etc. The processing unit 702 may be configured to execute program instructions stored in memory 704 and/or storage 706 and/or received via data entry module 708.

The memory 704 may include read only memory (ROM) 716 and random access memory (RAM) 718. Memory 704 may be configured to store program instructions and data during operation of device 700. In various embodiments, memory 704 may include any of a variety of memory technologies such as static random access memory (SRAM) or dynamic RAM (DRAM), including variants such as dual data rate synchronous DRAM (DDR SDRAM), error correcting code synchronous DRAM (ECC SDRAM), or RAMBUS DRAM (RDRAM), for example. Memory 704 may also include nonvolatile memory technologies such as nonvolatile flash RAM (NVRAM) or ROM. In some embodiments, it is contemplated that memory 704 may include a combination of technologies such as the foregoing, as well as other technologies not specifically mentioned. When the subject matter is implemented in a computer system, a basic input/output system (BIOS) 720, containing the basic routines that help to transfer information between elements within the computer system, such as during start-up, is stored in ROM 716.

The storage 706 may include a flash memory data storage device for reading from and writing to flash memory, a hard disk drive for reading from and writing to a hard disk, a magnetic disk drive for reading from or writing to a removable magnetic disk, and/or an optical disk drive for reading from or writing to a removable optical disk such as a CD ROM, DVD or other optical media. The drives and their associated computer-readable media provide nonvolatile storage of computer readable instructions, data structures, program modules and other data for the hardware device 700.

It is noted that the methods described herein can be embodied in executable instructions stored in a non-transitory computer readable medium for use by or in connection with an instruction execution machine, apparatus, or device, such as a computer-based or processor-containing machine, apparatus, or device. It will be appreciated by those skilled in the art that for some embodiments, other types of computer readable media may be used which can store data that is accessible by a computer, such as magnetic cassettes, flash memory cards, digital video disks, Bernoulli cartridges, RAM, ROM, and the like may also be used in the exemplary operating environment. As used here, a "computer-readable medium" can include one or more of any suitable media for storing the executable instructions of a computer program in one or more of an electronic, magnetic, optical, and electromagnetic format, such that the instruction execution machine, system, apparatus, or device can read (or fetch) the instructions from the computer readable medium and execute the instructions for carrying out the described methods. A non-exhaustive list of conventional exemplary computer readable medium includes: a portable computer diskette; a RAM; a ROM; an erasable programmable read only memory (EPROM or flash memory); optical storage devices, including a portable compact disc (CD), a portable digital video disc (DVD), a high definition DVD (HD-DVD™), a BLU-RAY disc; and the like.

A number of program modules may be stored on the storage 706, ROM 716 or RAM 718, including an operating system 722, one or more applications programs 724, program data 726, and other program modules 728. A user may enter commands and information into the hardware device 700 through data entry module 708. Data entry module 708 may include mechanisms such as a keyboard, a touch screen, a pointing device, etc. Other external input devices (not shown) are connected to the hardware device 700 via external data entry interface 730. By way of example and not limitation, external input devices may include a microphone, joystick, game pad, satellite dish, scanner, or the like. In some embodiments, external input devices may include video or audio input devices such as a video camera, a still camera, etc. Data entry module 708 may be configured to receive input from one or more users of device 700 and to deliver such input to processing unit 702 and/or memory 704 via bus 714.

The hardware device 700 may operate in a networked environment using logical connections to one or more remote nodes (not shown) via communication interface 712. The remote node may be another computer, a server, a router, a peer device or other common network node, and typically includes many or all of the elements described above relative to the hardware device 700. The communication interface 712 may interface with a wireless network and/or a wired network. Examples of wireless networks include, for example, a BLUETOOTH network, a wireless personal area network, a wireless 802.11 local area network (LAN), and/or wireless telephony network (e.g., a cellular, PCS, or GSM network). Examples of wired networks include, for example, a LAN, a fiber optic network, a wired personal area network, a telephony network, and/or a wide area network (WAN). Such networking environments are commonplace in intranets, the Internet, offices, enterprise-wide computer networks and the like. In some embodiments, communication interface 712 may include logic configured to support direct memory access (DMA) transfers between memory 704 and other devices.

In a networked environment, program modules depicted relative to the hardware device 700, or portions thereof, may be stored in a remote storage device, such as, for example, on a server. It will be appreciated that other hardware and/or software to establish a communications link between the hardware device 700 and other devices may be used.

It should be understood that the arrangement of hardware device 700 illustrated in FIG. 7 is but one possible implementation and that other arrangements are possible. It should also be understood that the various system components (and means) defined by the claims, described above, and illustrated in the various block diagrams represent logical components that are configured to perform the functionality described herein. For example, one or more of these system components (and means) can be realized, in whole or in part, by at least some of the components illustrated in the arrangement of hardware device 700. In addition, while at least one of these components are implemented at least partially as an electronic hardware component, and therefore constitutes a machine, the other components may be implemented in software, hardware, or a combination of software and hardware. More particularly, at least one component defined by the claims is implemented at least partially as an electronic hardware component, such as an instruction execution machine (e.g., a processor-based or processor-containing machine) and/or as specialized circuits or circuitry (e.g., discrete logic gates interconnected to perform a specialized function), such as those illustrated in FIG. 7. Other components may be implemented in software, hardware, or a combination of software and hardware. Moreover, some or all of these other components may be combined, some may be omitted altogether, and additional components can be added while still achieving the functionality described herein. Thus, the subject matter described herein can be embodied in many different variations, and all such variations are contemplated to be within the scope of what is claimed.

In the description above, the subject matter may be described with reference to acts and symbolic representations of operations that are performed by one or more devices, unless indicated otherwise. As such, it will be understood that such acts and operations, which are at times referred to as being computer-executed, include the manipulation by the processing unit of data in a structured form. This manipulation transforms the data or maintains it at locations in the memory system of the computer, which reconfigures or otherwise alters the operation of the device in a manner well understood by those skilled in the art. The data structures where data is maintained are physical locations of the memory that have particular properties defined by the format of the data. However, while the subject matter is being described in the foregoing context, it is not meant to be limiting as those of skill in the art will appreciate that various of the acts and operation described hereinafter may also be implemented in hardware.

For purposes of the present description, the terms "component," "module," and "process," may be used interchangeably to refer to a processing unit that performs a particular function and that may be implemented through computer program code (software), digital or analog circuitry, computer firmware, or any combination thereof.

It should be noted that the various functions disclosed herein may be described using any number of combinations of hardware, firmware, and/or as data and/or instructions embodied in various machine-readable or computer-readable media, in terms of their behavioral, register transfer, logic component, and/or other characteristics. Computer-readable media in which such formatted data and/or instructions may be embodied include, but are not limited to, physical (non-transitory), non-volatile storage media in various forms, such as optical, magnetic or semiconductor storage media.

In the description above and throughout, numerous specific details are set forth in order to provide a thorough understanding of the disclosure. It will be evident, however, to one of ordinary skill in the art, that the disclosure may be practiced without these specific details. In other instances, well-known structures and devices are shown in block diagram form to facilitate explanation. The description of the preferred an embodiment is not intended to limit the scope of the claims appended hereto. Further, in the methods disclosed herein, various steps are disclosed illustrating some of the functions of the disclosure. One will appreciate that these steps are merely exemplary and are not meant to be limiting in any way. Other steps and functions may be contemplated without departing from this disclosure. The scope of protection is defined by the appended claims.

**Claims**

1. A method (300) for modifying one of far-end signal playback and capture of local audio on an audio device during a conference call, the method comprising the steps of:

   receiving (305), by an audio device, one or more far-end audio streams;
   splitting (310) each far-end audio stream into a plurality of frames;
   analyzing (320) each frame of each far-end audio stream using a measure of voice activity to determine if there is voice activity within each frame, the analyzing producing far-end voice data associated with each frame of the corresponding far-end audio stream;
   analyzing (325) frames of a local input audio stream using the measure of voice activity to produce near-end voice data;
   determining (330) a conference state based on the far-end voice data for each far-end audio stream and the near-end voice data, wherein the conference state comprises a near-end presentation state, a far-end presentation state, and a conversation state; and
   based on the determined conference state, modifying (340) at least one of playback of a far-end audio stream of the one or more far-end audio streams on a speaker of the audio device and capture of local audio on the audio device;
   wherein said modifying (340) comprises at least one of: modifying voice-activity thresholds for the measure of voice activity, modifying a microphone level of the audio device, and modifying noise suppression of the audio device.

2. The method (300) of claim 1, the determining (330) the conference state comprising:

   calculating a transaction parameter value based on the far-end voice data and the near-end voice data; and
   based on the calculated transaction parameter value, assigning the conference state to the conference call.

3. The method (300) of claim 2, the calculated transaction parameter value falling within one of a plurality of predetermined ranges, each predetermined range being associated with a conference state.

4. The method (300) of claim 3, a predetermined range being assigned to each of the near-end presentation state, the far-end presentation state, and the conversation state.

5. The method (300) of any one of claims 1 to 4, comprising the further step of filtering the voice data to remove short bursts, and/or applying a hold-over on the voice data that indicates presence of voice for a predetermined additional time period after the voice sound has ended in the incoming audio stream.

6. The method (300) of any one of claims 1 to 5, wherein a plurality of far-end audio streams are received by the audio device, each far-end audio stream being transmitted with an associated data stream, each associated data stream comprising context information for the corresponding far-end audio stream;
   wherein the modifying (340) at least one of playback of a far-end audio stream of the plurality of far-end audio streams and capture of local audio on the audio device is further based on the context information for the far-end audio stream of the plurality of far-end audio streams, the playback of the far-end audio stream being performed on a speaker of the audio device.

7. The method (300) of claim 6, further comprising identifying a far-end audio stream of the plurality of audio streams that is contributing a nuisance, the identifying being based on the voice data associated with the far-end audio stream contributing the nuisance, and modifying playback of the far-end audio stream contributing the nuisance in response to the identifying the far-end audio stream contributing the nuisance.

8. An audio device (400) comprising,

   a near-end audio processor (410) that receives audio signal data from a microphone (405), and analyzes frames of the audio signal data using a measure of voice activity to produce near-end voice data;
   a far-end audio processor (430, 440, 445) that receives one or more incoming audio streams, splits each incoming audio stream into a plurality of frames, and analyzes each frame of each incoming audio stream using the measure of voice activity to produce far-end voice data associated with each frame of the corresponding incoming audio stream; and

a conference modeling circuit (420) coupled to the both the near-end audio processor (410) and the far-end audio processor (430, 440, 445), the conference modeling circuit (420) determining a conference state based on both the near-end voice data and the far-end voice data for each incoming audio stream, the conference state comprising a near-end presentation state, a far-end presentation state, and a conversation state, and, based on the determined conference state, modifying at least one of playback of an incoming audio stream of the one or more incoming audio streams on a speaker (455) and capture of local audio on the audio device (400), wherein said modifying comprises at least one of: modifying voice-activity thresholds for the measure of voice activity, modifying a microphone level of the audio device, and modifying noise suppression of the audio device.

## Patentansprüche

1. Verfahren (300) zum Modifizieren von einem einer Far-End-Signalwiedergabe und Erfassung von lokalem Audio auf einer Audiovorrichtung während eines Konferenzanrufs, wobei das Verfahren folgende Schritte umfasst:

Empfangen (305) durch eine Audiovorrichtung von einem oder mehreren Far-End-Audiostreams;
Aufteilen (310) von jedem Far-End-Audiostream in eine Vielzahl von Frames;
Analysieren (320) von jedem Frame eines jeden Far-End-Audiostreams unter Verwendung von einem Maß von Sprachaktivität, um zu bestimmen, ob innerhalb eines jeden Frames Sprachaktivität vorhanden ist, wobei Analysieren Far-End-Sprachdaten erzeugt, die jedem Frame des entsprechenden Far-End-Audiostreams zugeordnet sind;
Analysieren (325) von Frames eines lokale Audio-Inputstreams unter Verwendung des Maßes von Sprachaktivität, um Near-End-Sprachdaten zu erzeugen;
Bestimmen (330) eines Konferenzzustands basierend auf den Far-End-Sprachdaten für jeden Far-End-Audiostream und den Near-End-Sprachdaten, wobei der Konferenzzustand einen Near-End-Präsentationszustand, einen Far-End-Präsentationszustand und einen Konversationszustand umfasst; und
basierend auf dem bestimmten Konferenzzustand, Modifizieren (340) von mindestens einem von Wiedergabe für einen Far-End-Audiostream des einen oder der mehreren Far-End-Audiostreams auf einem Lautsprecher der Audiovorrichtung und Erfassung von lokalem Audio auf der Audiovorrichtung;
wobei das Modifizieren (340) mindestens eines umfasst von: Modifizieren von Sprachaktivitätsschwellwerten für das Maß von Sprachaktivität, Modifizieren eines Mikrofonpegels der Audiovorrichtung und Modifizieren von Geräuschunterdrückung der Audiovorrichtung.

2. Verfahren (300) nach Anspruch 1, wobei Bestimmen (330) des Konferenzzustands Folgendes umfasst:

Berechnen eines Transaktionsparameterwerts, basierend auf den Far-End-Sprachdaten und den Near-End-Sprachdaten; und
basierend auf dem berechneten Transaktionsparameterwert, Zuweisen des Konferenzzustands zu dem Konferenzanruf.

3. Verfahren (300) nach Anspruch 2, wobei der berechnete Transaktionsparameterwert innerhalb eines einer Vielzahl von vorbestimmten Bereichen fällt, wobei jeder vorbestimmte Bereich einem Konferenzzustand zugeordnet ist.

4. Verfahren (300) nach Anspruch 3, wobei ein vorbestimmter Bereich jedem des Near-End-Präsentationszustands, des Far-End-Präsentationszustands und des Konversationszustands zugewiesen ist.

5. Verfahren (300) nach einem der Ansprüche 1 bis 4, umfassend den weiteren Schritt des Filterns der Sprachdaten, um kurze Störungen zu entfernen und/oder eine Verlängerung auf die Sprachdaten anzuwenden, die Vorhandensein von Sprache für eine vorbestimmte zusätzliche Zeitspanne nachdem der Sprachton geendet ist in dem eingehenden Audiostream anzeigt.

6. Verfahren (300) nach einem der Ansprüche 1 bis 5, wobei eine Vielzahl von Far-End-Audiostreams von der Audiovorrichtung empfangen wird, wobei jeder Far-End-Audiostream mit einem zugeordneten Datenstrom übertragen wird, wobei jeder zugeordnete Datenstrom Kontextinformationen für den entsprechenden Far-End-Audiostream umfasst;

wobei das Modifizieren (340) von mindestens einem von Wiedergabe eines Far-End-Audiostreams der Vielzahl von Far-End-Audiostreams und Erfassung von lokalem Audio auf der Audiovorrichtung weiter basierend ist auf den Kontextinformationen für den Far-End-Audiostream der Vielzahl von Far-End-Audiostreams, wobei die Wiedergabe des Far-End-Audiostreams auf einem Lautsprecher der Audiovorrichtung vorgenommen wird.

7. Verfahren (300) nach Anspruch 6, weiter umfassend Identifizieren eines Far-End-Audiostreams der Vielzahl von Audiostreams, der eine Belästigung beisteuert, wobei Identifizieren basierend ist auf den Sprachdaten, die dem Far-End-Audiostream zugeordnet sind, der die Belästigung beisteuert, und Modifizieren von Wiedergabe des Far-End-Audiostreams, der die Belästigung beisteuert, als Antwort auf Identifizieren des Far-End-Audiostreams, der die Belästigung beisteuert.

8. Audiovorrichtung (400), umfassend,

einen Near-End-Audioprozessor (410), der Audiosignaldaten von einem Mikrofon (405) empfängt und Frames der Audiosignaldaten unter Verwendung eines Maßes von Sprachaktivität analysiert, um Near-End-Sprachdaten zu erzeugen;

einen Far-End-Audioprozessor (430, 440, 445), der einen oder mehrere eingehende Audiostreams empfängt, jeden eingehenden Audiostream in eine Vielzahl von Frames aufteilt und jeden Frame eines jeden eingehenden Audiostreams unter Verwendung des Maßes von Sprachaktivität analysiert, um Far-End-Sprachdaten zu erzeugen, die jedem Frame des entsprechenden eingehenden Audiostreams zugeordnet sind; und

eine Konferenzmodellierungsschaltung (420), die sowohl mit dem Near-End-Audioprozessor (410) als auch dem Far-End-Audioprozessor (430, 440, 445) gekoppelt ist, wobei die Konferenzmodellierungsschaltung (420) einen Konferenzzustand bestimmt, basierend sowohl auf den Near-End-Sprachdaten als auch auf den Far-End-Sprachdaten für jeden eingehenden Audiostream, wobei der Konferenzzustand einen Near-End-Präsentationszustand, einen Far-End-Präsentationszustand und einen Konversationszustand umfasst, und basierend auf dem bestimmten Konferenzzustand mindestens eines von Wiedergabe eines eingehenden Audiostreams des einen oder der mehreren eingehenden Audiostreams auf einem Lautsprecher (455) und Erfassung von lokalem Audio auf der Audiovorrichtung (400) modifiziert, wobei das Modifizieren mindestens eines umfasst von: Modifizieren von Sprachaktivitätsschwellenwerten für das Maß von Sprachaktivität, Modifizieren eines Mikrofonpegels der Audiovorrichtung und Modifizieren von Geräuschunterdrückung auf der Audiovorrichtung.

## Revendications

1. Procédé (300) pour modifier l'une parmi une diffusion d'un signal d'extrémité distante et une capture de signal audio local sur un dispositif audio pendant une conférence téléphonique, le procédé comprenant les étapes de :

réception (305), par un dispositif audio, d'un ou plusieurs flux audio d'extrémité distante ;
division (310) de chaque flux audio d'extrémité distante en une pluralité de trames ;
analyse (320) de chaque trame de chaque flux audio d'extrémité distante par une mesure de l'activité vocale pour déterminer s'il y a une activité vocale dans chaque trame, l'analyse produisant des données vocales d'extrémité distante associées à chaque trame du flux audio d'extrémité distante correspondant ;
analyse (325) de trames d'un flux audio entrant local par la mesure de l'activité vocale pour produire des données vocales d'extrémité proche ;
détermination (330) d'un état de conférence sur la base des données vocales d'extrémité lointaine pour chaque flux audio d'extrémité lointaine et des données vocales d'extrémité proche, dans lequel l'état de conférence comprend un état de présentation d'extrémité proche, un état de présentation d'extrémité lointaine et un état de conversation ; et
sur la base de l'état de conférence déterminé, modification (340) d'au moins l'une parmi une diffusion d'un flux audio d'extrémité distante des un ou plusieurs flux audio d'extrémité distante sur un haut-parleur du dispositif audio et une capture de signal audio local sur le dispositif audio ;
dans lequel ladite modification (340) comprend au moins l'une parmi : la modification de seuils d'activité vocale pour la mesure de l'activité vocale, la modification d'un niveau de microphone du dispositif audio, et la modification d'une suppression de bruit du dispositif audio.

2. Procédé (300) selon la revendication 1, la détermination (330) de l'état de conférence comprenant :

le calcul d'une valeur de paramètre de transaction sur la base des données vocale d'extrémité distante et des données vocales d'extrémité proche ; et

sur la base de la valeur de paramètre de transaction calculée, l'attribution de l'état de conférence à la conférence téléphonique.

3. Procédé (300) selon la revendication 2, la valeur de paramètre de transaction calculée se situant dans une d'une pluralité de plages prédéterminées, chaque plage prédéterminée étant associée à un état de conférence.

4. Procédé (300) selon la revendication 3, une plage prédéterminée étant attribuée à chacun de l'état de présentation d'extrémité proche, l'état de présentation d'extrémité lointaine et l'état de conversation.

5. Procédé (300) selon l'une quelconque des revendications 1 à 4, comprenant l'étape supplémentaire de filtrage des données vocales pour éliminer des salves courtes, et/ou d'application d'une retenue sur les données vocales qui indiquent la présence d'une voix pendant une durée supplémentaire prédéterminée après la fin du son vocal dans le flux audio entrant.

6. Procédé (300) selon l'une quelconque des revendications 1 à 5, dans lequel une pluralité de flux audio d'extrémité distante sont reçus par le dispositif audio, chaque flux audio d'extrémité distante étant transmis avec un flux de données associé, chaque flux de données associé comprenant des informations contextuelles propres au flux audio d'extrémité distante correspondant ;

dans lequel la modification (340) d'au moins l'une parmi une diffusion d'un flux audio d'extrémité distante de la pluralité de flux audio d'extrémité distante et/ou une capture de signal audio local sur le dispositif audio est en outre basée sur les informations contextuelles propres au flux audio d'extrémité distante de la pluralité de flux audio d'extrémité distante, la diffusion du flux audio d'extrémité distante étant effectuée sur un haut-parleur du dispositif audio.

7. Procédé (300) selon la revendication 6, comprenant en outre l'identification d'un flux audio d'extrémité distante de la pluralité de flux audio qui contribue à une nuisance, l'identification étant basée sur les données vocales associées au flux audio d'extrémité distante contribuant à la nuisance, et la modification de la diffusion du flux audio d'extrémité distante contribuant à la nuisance en réponse à l'identification du flux audio d'extrémité distante contribuant à la nuisance.

8. Dispositif audio (400) comprenant :

un processeur audio d'extrémité proche (410) qui reçoit des données de signal audio à partir d'un microphone (405), et analyse des trames des données de signal audio par une mesure de l'activité vocale pour produire des données vocales d'extrémité proche ;

un processeur audio d'extrémité lointaine (430, 440, 445) qui reçoit un ou plusieurs flux audio entrants, divise chaque flux audio entrant en une pluralité de trames, et analyse chaque trame de chaque flux audio entrant par la mesure de l'activité vocale pour produire des données vocales d'extrémité lointaine associées à chaque trame du flux audio entrant correspondant ; et

un circuit de modélisation de conférence (420) couplé à la fois au processeur audio d'extrémité proche (410) et au processeur audio d'extrémité lointaine (430, 440, 445), le circuit de modélisation de conférence (420) assurant la détermination d'un état de conférence sur la base à la fois des données vocales d'extrémité proche et des données vocales d'extrémité lointaine pour chaque flux audio entrant, l'état de conférence comprenant un état de présentation d'extrémité proche, un état de présentation d'extrémité lointaine et un état de conversation, et, sur la base de l'état de conférence déterminé, la modification d'au moins l'une parmi une diffusion d'un flux audio entrant des un ou plusieurs flux audio entrants sur un haut-parleur (455) et une capture de signal audio local sur le dispositif audio (400), dans lequel ladite modification comprend au moins l'une parmi : la modification de seuils d'activité vocale pour la mesure de l'activité vocale, la modification d'un niveau de microphone du dispositif audio, et la modification d'une suppression de bruit du dispositif audio.

100

Receive far-end audio stream and split into frames
110

Analyze far-end audio stream to generate far-end voice data
120

Analyze near-end audio stream to generate near-end voice data
130

Determine a conference state based on the far-end and near-end voice data
140

Modify playback or capture settings of device based on determined conference state
150

# FIG. 1

**FIG. 2**

EP 3 280 123 B1

300

Receive plurality of far-end audio streams, each being
transmitted with an associated data stream
305

↓

Split each far-end stream into frames
310

↓

Analyze each frame of each far-end audio stream to determine
voice activity within each frame
320

↓

Analyze near-end audio stream to generate near-end voice data
325

↓

Determine conference state based on voice data for all streams
330

↓

Modify playback or capture settings of device based on
determined conference state
340

# FIG. 3

FIG. 4

400

mic/s 405 → Audio Processing 410

Processing Changes

415 Processed Audio to far end

Conference Interaction Model 420

DATA

DATA 460

DATA

playback changes

far end 1 425 — Audio Processing 430

far end 2 435 — Audio Processing 440

far end (p-1) 465 — Audio Processing 445

Audio playback 450

455

500

Receive far-end audio stream and split into frames
510

Analyze each frame using two measures of voice activity
520

Determine if nuisance state exists by modifying nuisance parameter based on voice activity measures for frame
530

Modify playback of the far-end audio stream when nuisance state identified
540

# FIG. 5

**FIG. 6**

EP 3 280 123 B1

**FIG. 7**

EP 3 280 123 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2302891 A1

- US 2005213739 A1